# EUROPEAN PATENT APPLICATION

(11) **EP 4 474 308 A1**
(43) Date of publication of application: **11.12.2024**
(21) Application number: 24180546.4
(22) Date of filing: 06.06.2024
(51) Int. Cl.: B65D 63/10

(54) **OBJECT BUNDLING APPARATUS**

(30) Priority: 09.06.2023 US 202318332386
(71) Applicant: ABB SCHWEIZ AG, 5400 Baden (CH)
(72) Inventor: WHITE, Ronald David, Memphis, 38120 (US); COOPER, Anthony Austin, Memphis, 38120 (US)
(74) Representative: Zimmermann & Partner Patentanwälte mbB

(57) **Abstract**

An object bundling apparatus includes an opening defining an engagement channel having an inner wall. At least one body engagement member is disposed on the inner wall having a holding surface laterally bound by a first end and a second end. The holding surface has a non-linear surface profile between the first end and second end. A strap is adapted to be passed through the opening in a direction of insertion, the strap having a plurality of strap engagement members. Each of the strap engagement members includes a contact surface laterally bound by a first strap end and a second strap end. The contact surface has a non-linear surface profile between the first strap end and second strap end. The non-linear contact surface profile of the strap is configured to nest within the non-linear holding surface profile and/or abut against the non-linear holding surface profile upon advancement of the strap in a direction opposite the direction of insertion.

## Description

### BACKGROUND

The field of the disclosure relates generally to object bundling systems and, more particularly, to object bundling apparatus having a non-linear contact surface profile.

Object bundling apparatus are used to collect or combine a plurality of cables that are strung in a ceiling, or other suitable suspension location in a building or factory for example. The bundling or locking system may comprise a strap that is adapted to be wrapped around the cable bundle. The strap has a flexible, unitary body with an opening located along the strap.

In use, the strap is wrapped around the cables and one end of the strap is inserted through the opening, and pulled through the opening in a first direction until the strap is positioned snugly against the collected cables. The strap includes outwardly directed locking members that impede loosening displacement of the strap end in a second direction, and as a result the locking members maintain the strap tightly against the cables.

Known straps are flexible. As a result, over time the weight of the cables causes the locking to members to degrade or fail, resulting in strap loosening or a releasing of the previously secure bundled cables. Because the cable bundles are frequently maintained in ceilings or other difficult to access building locations, repairing object bundling apparatus can prove to be difficult. There is a need for an object bundling apparatus that maintains the support of the cable bundle over time.

### BRIEF DESCRIPTION

In a first aspect of the present disclosure, an object bundling apparatus is disclosed. The apparatus includes a body having an opening extending through the body, the opening defining an engagement channel having an inner wall. At least one body engagement member is disposed on the inner wall, the at least one body engagement member having a holding surface laterally bound by a first end and a second end. The holding surface has a non-linear surface profile between the first end and second end. A strap is adapted to be passed through the opening in a direction of insertion. The strap has a plurality of strap engagement members, each of the strap engagement members having a contact surface laterally bound by a first strap end and a second strap end. The contact surface has a non-linear surface profile between the first strap end and second strap end. The non-linear contact surface profile of the strap is configured to nest within the non-linear holding surface profile of the body upon advancement of the strap in a direction opposite the direction of insertion.

In a second aspect of the present disclosure, an object bundling apparatus is disclosed. The apparatus includes a body having an opening extending through the body, the opening defining an engagement channel having an inner wall. At least one body engagement member is disposed on the inner wall, the at least one body engagement member having a holding surface laterally bound by a first end and a second end. The holding surface has a non-linear surface profile between the first end and second end. A strap is adapted to be passed through the opening in a direction of insertion. The strap has a plurality of strap engagement members, each of the strap engagement members having a contact surface laterally bound by a first strap end and a second strap end. The contact surface has a non-linear surface profile between the first strap end and second strap end. The non-linear contact surface profile of the strap is configured to abut against the non-linear holding surface profile of the body upon advancement of the strap in a direction opposite the direction of insertion.

### BRIEF DESCRIPTION OF THE DRAWINGS

FIG. 1 illustrates a perspective top view of an object bundling apparatus in accordance with one or more embodiments of the present disclosure;
FIG. 2 illustrates a bottom view of the object bundling apparatus of FIG. 1;
FIG. 3 illustrates a bottom perspective view of the object bundling apparatus of FIG. 1;
FIG. 4 illustrates a cross-sectional view of a body of the object bundling apparatus of FIG. 1, taken along line 3-3' of Fig. 2;
FIG. 5 illustrates a cross-sectional view of the body of the object bundling apparatus of FIG. 1, taken along line 5-5' of Fig. 1;
FIG. 6 illustrates a cross-sectional view of a strap inserted into the body of the object bundling apparatus of FIG. 1;
FIG. 7 illustrates a cross-sectional view of a strap inserted into the body of the object bundling apparatus of FIG. 1;
FIG. 8 illustrates a bottom perspective view of an object bundling apparatus in accordance with a second embodiment of the present disclosure;
FIG. 9 illustrates a cross-sectional view of a strap inserted into the body of the object bundling apparatus of FIG. 8;
FIG. 10 illustrates a cross-sectional view of an object bundling apparatus in accordance with a third embodiment of the present disclosure; and,
FIG. 11 illustrates a cross-sectional view of an object bundling apparatus in accordance with a fourth embodiment of the present disclosure.

The reference symbols used in the drawings, and their meanings, are listed in summary form in the list of reference symbols. In principle, identical parts are provided with the same reference symbols in the figures.

### DETAILED DESCRIPTION

In the following specification and the claims, reference will be made to a number of terms, which shall be defined to have the following meanings.

As used herein, the singular forms "a," "an," and "the" include plural references unless the context clearly dictates otherwise. The terms "comprising," "including," and "having" are intended to be inclusive and mean that there may be additional elements other than the listed elements. The terms "optional" or "optionally" means that the subsequently described event or circumstance may or may not occur, and that the description includes instances where the event occurs and instances where it does not.

As used herein, the spatial terms "upper," "lower," "top" and "bottom" as used in the present disclosure shall denote a component, or an element of a component, which is upstream or downstream relative to other components and elements of components unless the context clearly dictates otherwise. The term "upper" or "top" shall denote a downstream component or element of a component, and the term "lower" or "bottom" shall denote an upstream component or element of a component. Where a component has a top surface and a bottom surface, the top surface is parallel to the bottom surface. Such relative spatial terms are used only to facilitate description and are not meant to be limiting.

The present disclosure is directed to embodiments of an object bundling apparatus. The apparatus includes a body having an opening extending through the body, the opening defining an engagement channel having an inner wall. At least one body engagement member is disposed on the inner wall, the at least one body engagement member having a holding surface laterally bound by a first end and a second end. The holding surface has a non-linear surface profile between the first end and second end. A strap is adapted to be passed through the opening in a direction of insertion. The strap has a plurality of strap engagement members, each of the strap engagement members having a surface laterally bound by a first strap end and a second strap end. The surface has a non-linear surface profile between the first strap end and second strap end.

In some embodiments, the non-linear surface profile of the strap is configured to nest within the non-linear holding surface profile of the body upon advancement of the strap in a direction opposite the direction of insertion. In some embodiments, the non-linear surface profile of the strap is configured to abut against the non-linear holding surface profile of the body upon advancement of the strap in a direction opposite the direction of insertion.

As used herein, the term "non-linear surface profile," "non-linear edge," "non-linear surface" and "non-linear" generally refer to a holding surface and/or a leading surface having an edge which is not perpendicular to a length of the head or strap. The non-linear surface profile may be at an acute angle relative to the length of the head or strap. The non-linear surface profile may be curved or may include one or more angled linear segments. The non-linear surface profile may include a combination of curved and one or more linear segments.

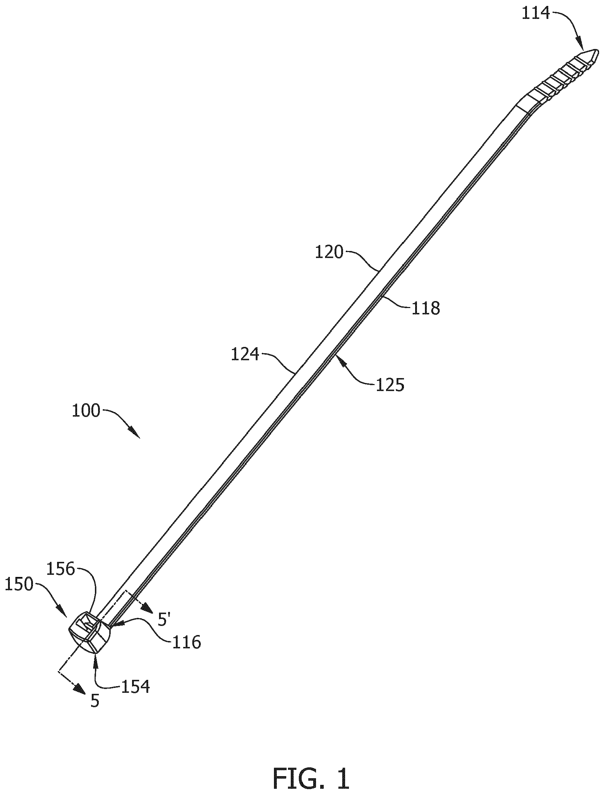

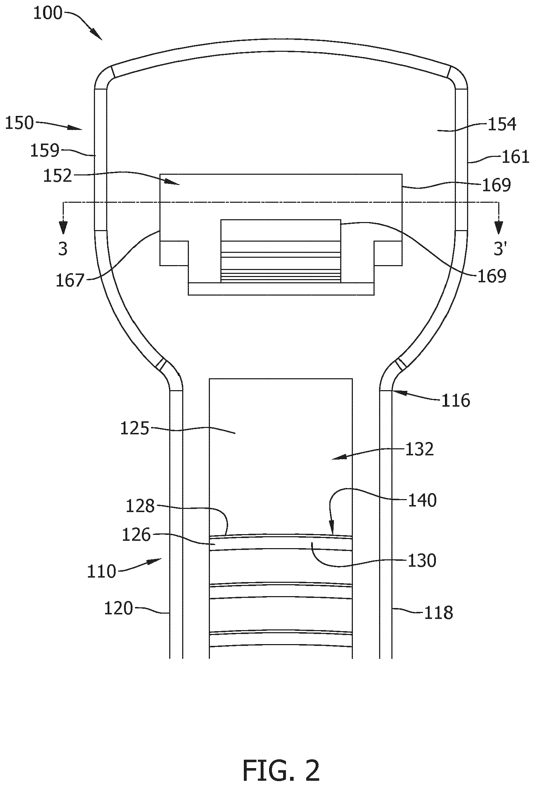

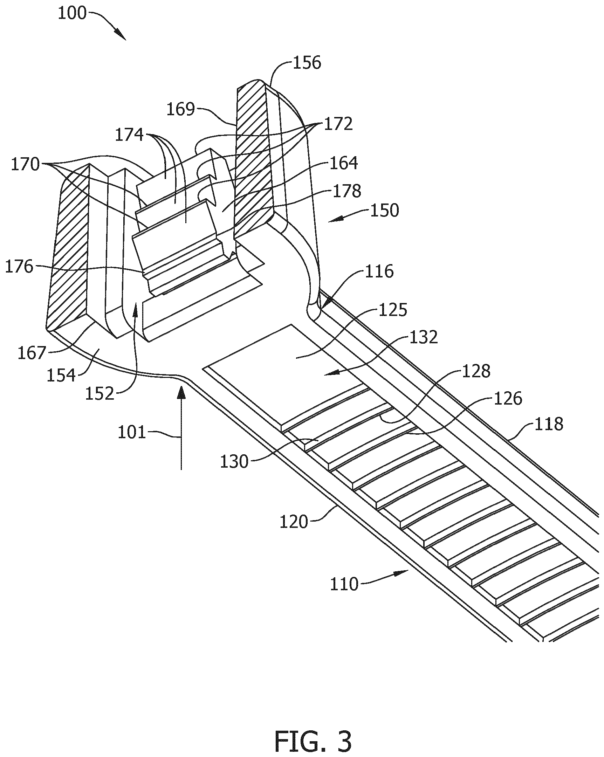

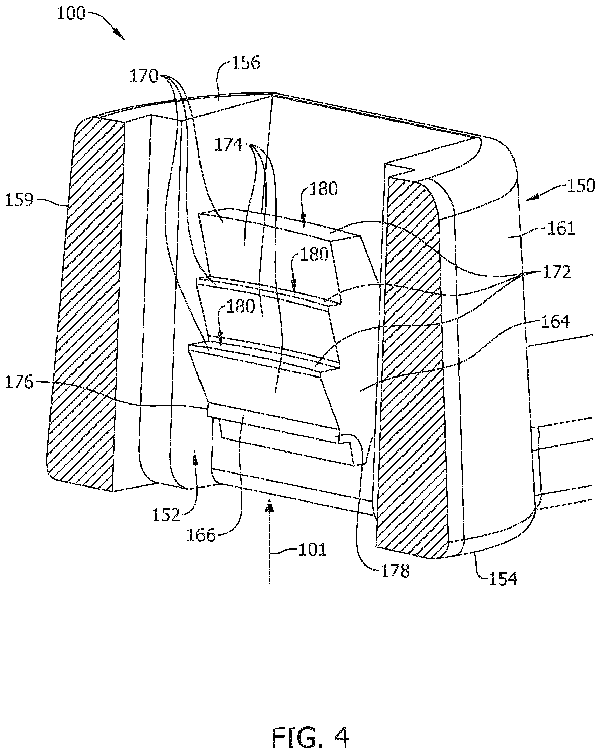

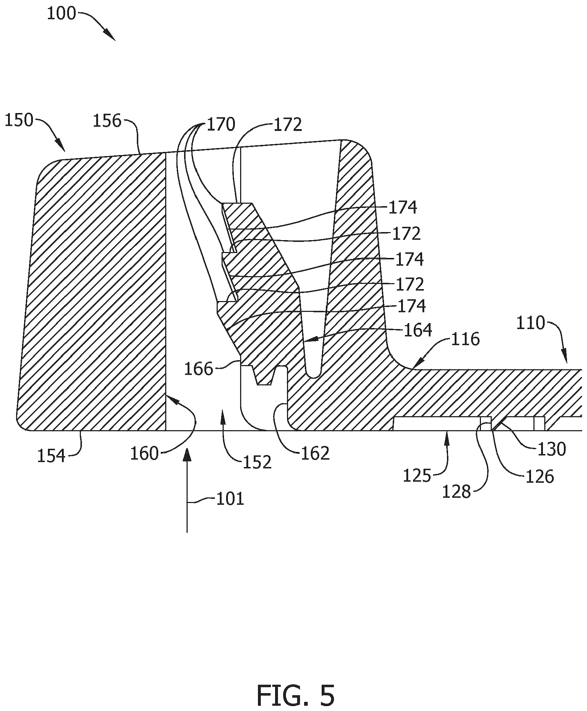

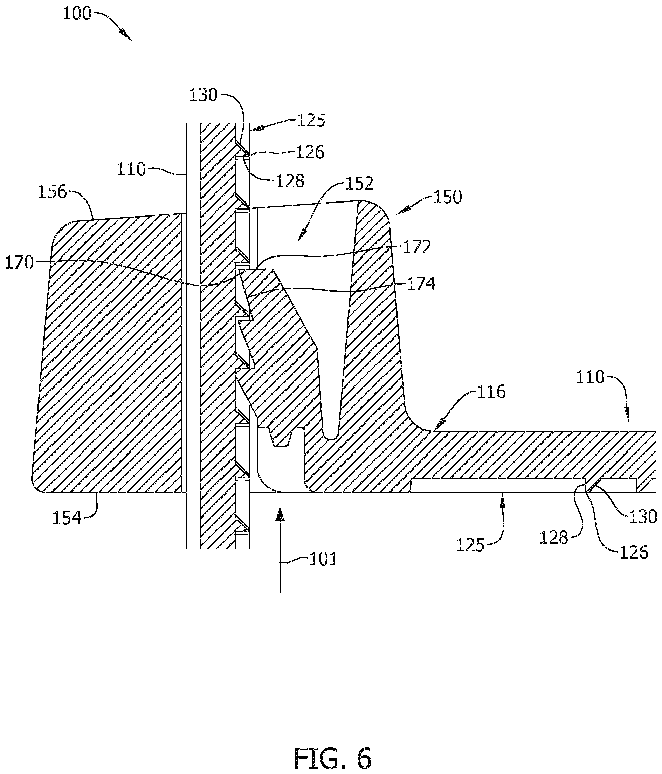

The object bundling apparatus 100 of a first embodiment of the disclosure is shown in FIGS. 1-6. FIG. 1 illustrates a top perspective view of an object bundling apparatus 100 having a strap 110 and a body 150. FIG. 2 illustrates a bottom view of the object bundling apparatus 100 and FIG. 3 illustrates a perspective cross-sectional view of the object bundling apparatus 100 taken along line 3-3' as shown in FIG. 2. FIG. 4 illustrates a perspective cross-sectional view of the body 150 taken along line 3-3' as shown in FIG. 2, and FIG. 5 illustrates a cross-sectional view of the body 150 taken along line 5-5' as shown in FIG. 1. FIG. 6 illustrates a cross-sectional view of the strap 110 inserted into an insertion chamber 152 of the body 150 of the object bundling apparatus 100. As shown in FIG. 1he strap 110 is elongate and the elongate strap 110 includes a first free end 114, a second end 116 made integral with the body 150, and a first lateral edge 118 and a second lateral edge 120 where the edges 118, 120 extend between ends 114 and 116. In the illustrated embodiments, the strap 110 is made integral with the body 150 at the second end 116 of the strap 110, thereby forming a unitary body comprising the strap 110 and body 150. In some embodiments, the strap 110 and body 150 are discrete members. In some embodiments, the strap 110 and the body 150 are comprised of a material selected from a group consisting of polymer, nylon, polyamide, heat stabilized nylon, and UV stabilized nylon.

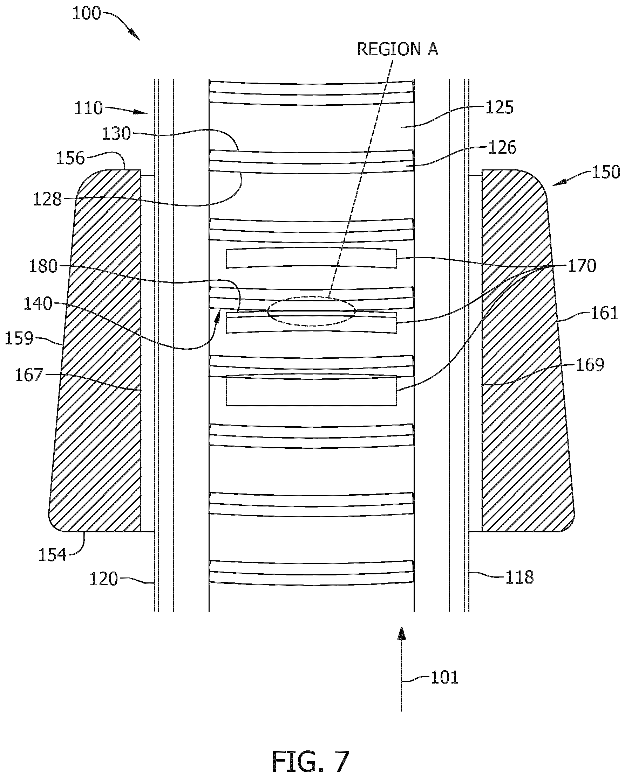

In the illustrated embodiments, a bottom surface 125 of the strap 110 includes a medial portion 132 laterally bound by the edges 118, 120 of the strap 110. The medial portion 132 includes a plurality of strap engagement members 126. As shown in FIGS. 3 and 5, the medial portion 132 is recessed relative to the bottom surface 125.. As explained in further detail below with reference to FIGS. 6 and 7, the plurality of strap engagement members 126 of the strap 110 are configured to interlock with at least one body engagement member 170 of the body 150 as the first free end 114 of the strap 110 is advanced through the insertion chamber 152 of the body 150 in a direction of insertion (indicated by arrows 101 in the figures). In some embodiments, the plurality of strap engagement members 126 of the strap 110 are barbed teeth that each interlocking or engaging with at least one body engagement member 170 of the body 150. In some embodiments, the engagement members are configured as a ratcheting mechanism, where the plurality of strap engagement members 126 of the strap 110 are advanceable in the direction of insertion 101, but are prevented from advancing in the opposite direction by the engagement between the strap engagement members and body engagement members 170.

As best shown in FIG. 5, in some embodiments, the plurality of strap engagement members 126 of the strap 110 include a holding surface 128 and a leading surface 130. In some embodiments, the holding surface 128 is substantially perpendicular relative to the bottom surface 125 of the strap 110 and the leading surface 130 is oriented at an angle relative to the substantially planar bottom surface 125 of the strap 110. In some embodiments, the leading surface 130 is directed towards and facing of the first free end 114 of the strap 110 and the holding surface 128 is in the direction of the second end 116.

As best shown in FIG. 2, the holding surface 128 of the strap 110 has a non-linear surface profile 140 defined between the edges 118, 120 of the strap 110. In the illustrated embodiments of FIGS. 1-7, the non-linear surface profile 140 is arc-shaped, however in some embodiments, the non-linear surface profile may have any shape. Furthermore, as best shown in FIG. 2, the non-linear surface profile 140 is convex relative to the second end 116 of the strap, and to the body 150. In some embodiments, the non-linear surface profile 140 may be concave relative to the second end 116 and to the body 150 as will be explained in further detail below. In some embodiments, the leading surface 130 also has an arc-shaped non-linear surface profile. In some embodiments, the leading surface 130 is concave or convex.

With reference to FIGS. 1 through 5, the body 150 includes an insertion end 154 and a removal end 156 opposite the insertion end 154. In some embodiments, the removal end 156 of the body 150 and top surface 124 of the strap 110 define top surfaces of the object bundling apparatus 100. In some embodiments, the leading end 154 of the body 150 and the bottom surface 125 of the strap 110 are planar. The body also includes a first channel wall 160, a second channel wall 162 and lateral sides 159, 161. The first channel wall 160, second channel wall 162 and lateral sides 159, 161 extend between the insertion and removal ends 154 and 156, and the first channel wall, second channel wall, lateral sides and insertion and removal ends collectively define an insertion chamber 152 adapted to receive the strap 110. The insertion chamber 152 extends through the body 150 from the insertion end 154 to the removal end 156, and the strap 110 is adapted to be advanced through the insertion chamber 152 from the insertion end 154 of the body 150 in the direction of insertion 101. The strap enters the insertion chamber through opening 163 formed on the insertion end 154 and exits the insertion chamber through opening 165 formed on the removal end 156.

As best shown in Fig. 5, In some embodiments, the second channel wall 162 includes a biasing member 164 extending from the second channel wall 162 into the insertion chamber 152. The biasing member 164 is integral to the second channel wall 162 adjacent the insertion end 154 and extends into the insertion chamber 152 towards the removal end 156 and terminates at a free end. In the illustrated embodiments, the biasing member 164 is a cantilevered member having one end bound by and integral to the second channel wall 162. As will be explained in further detail below, the biasing member 164 is adapted to apply a biasing force against the strap 110 upon insertion of the strap 110 into the insertion chamber 152, such that the biasing member is urged towards the strap member and thereby maintains engagement between the body engagement members 170 and the strap engagement members 126.

With reference to FIGS. 1 through 5, the body 150 further includes at least one body engagement member 170 disposed on the biasing member 164 and directed towards the insertion chamber 152. In some embodiments, the least one body engagement member 170 of the body 150 are barbed teeth that each interlock with the plurality of strap engagement members 126 of the strap 110. As best shown in FIGS. 4 and 5, in some embodiments, the at least one body engagement member 170 includes a holding surface 172 and a leading surface 174. The holding surface 172 is laterally bound by a first lateral biasing member side 176 and a second lateral biasing member side 178. In some embodiments, the holding surface 172 is substantially parallel to the opening 163 on the insertion end 154. The leading surface 174 is oriented at an angle of less than ninety degrees relative to the respective holding surfaces. The leading surface 174 extends between adjacent holding surfaces in the direction of insertion 101.

As best shown in FIG. 4, the holding surface 172 has a non-linear surface profile or contour 180 defined between the first end 176 and second end 178. In the illustrated embodiments of FIGS. 1-7, the non-linear surface profile 180 is arc-shaped, however it is understood that the non-linear surface profile may have any shape. Furthermore, in the illustrated embodiments of FIGS. 1-7, the non-linear surface profile 180 is concave relative to the direction of insertion 101 (as best shown in FIGS. 4 and 7). In some embodiments, the non-linear surface profile 180 may be convex relative to the direction of insertion 101. In some embodiments, the leading surface 174 also has an arc-shaped non-linear surface profile. In some embodiments, the leading surface 174 is concave or convex. The body includes interior shoulder members 167 and 169 that are located in the insertion chamber 152. The shoulder members extend between the insertion end 154 and the removal end 156 and are adjacent the first lateral biasing member side 176 and second lateral biasing member side 178. When the strap is inserted in the insertion chamber, the bottom surface is supported on the shoulders and the strap medial portion 132 overlays the biasing member 164, enabling the strap and body engagement members to effectively move into engagement as the strap moves in direction 101. See FIG. 7.

In operation, the strap 110 is advanced in the direction of insertion 101 until an object surrounded by the strap 110 is cinched to a desired torque or holding force, or until the strap 110 can no longer be advanced in the direction of insertion 101. Subsequently advancing the strap 110 in the second direction opposite the direction of insertion 101 causes the holding surface 128 of the strap 110 to engage the holding surface 172 of the body 150, preventing the strap 110 from further advancing in the opposite direction, and non-removably locking the strap 110 to the body 150 and defining a locked state where loosening displacement of the strap 110 is impeded. The biasing member 164 is adapted to apply a biasing force against the strap 110 upon insertion of the strap 110 into the insertion chamber 152, such that the inner wall 166 is biased against the strap 110.

As the first free end 114 of the strap 110 is inserted into the body 150, the leading surface 130 of the strap 110 first traverses the leading surface 174 of the body 150 and the holding surface 128 of the strap 110 interlocks with the holding surface 172 of the body 150. As best shown in FIG. 7, The holding surface 128 of the strap 110 engages the holding surface 172 of the body 150 upon advancement of the strap 110 in a direction opposite the direction of insertion 101 after at least one holding surface 128 of the strap 110 traverses over the holding surface 172 of the body 150 in the direction of insertion 101. The biasing member 164, contacts the strap urging the strap toward surface 160 and maintaining body engagement members 170 proximate the strap engagement members 126, thereby impeding loosening displacement of strap 110 in a direction opposite insertion direction 101. In the illustrated embodiment, the body 150 includes a plurality of strap engagement members 170 which form the ratcheting mechanism, however it is understood that a single engagement member 170 may form the ratcheting mechanism together with the plurality of strap engagement members 126 of the strap 110.

FIG. 6 illustrates a side view of the strap 110 inserted within the insertion chamber 152 of the body 150 and FIG. 7 illustrates a cross-sectional view of the strap 110 inserted within the insertion chamber 152 of the body 150. As shown, the strap 110 is integral to the second end 116 and to the body 150 such that the strap 110 can be looped around the body 150 and inserted from the insertion end 154 in the direction of insertion 101. The biasing member 164 applies a biasing force against the strap 110 such that the at least one body engagement member 170 of the body 150 engages with the plurality of strap engagement members 126 of the strap 110.The engagement is also shown in FIG. 7.

As previously set forth, the non-linear surface profile 140 of the holding surface 128 of the strap 110 is convex relative to the second end 116 and to the body 150, and the non-linear surface profile 180 is concave relative to the direction of insertion 101 (or relative to the insertion end 154 of the body 150). With the strap 110 looped though the body 150 from the insertion end 154, the convex non-linear surface profile 140 of the strap 110 is oriented towards the insertion end 154 of the body 150. This configuration causes the convex non-linear contact surface profile 140 of the strap 110 to abut against and engage the concave non-linear holding surface profile 180 of the body 150 upon advancement of the strap 110 in a direction opposite the direction of insertion 101. Because of the non-linear contours 140, 180 of the engagement members, only portions of the engagement members are in contacting engagement. The region where the contact surfaces partially engage is indicated as REGION A in FIG. 7. The concentration of holding forces at REGION A effectuate a stronger ratcheting lock which prevents strip-out of the strap 110 from the body 150.

As used herein, the term "abut" with respect to engaged surface profiles denotes direct contact with a portion of the surface profiles.

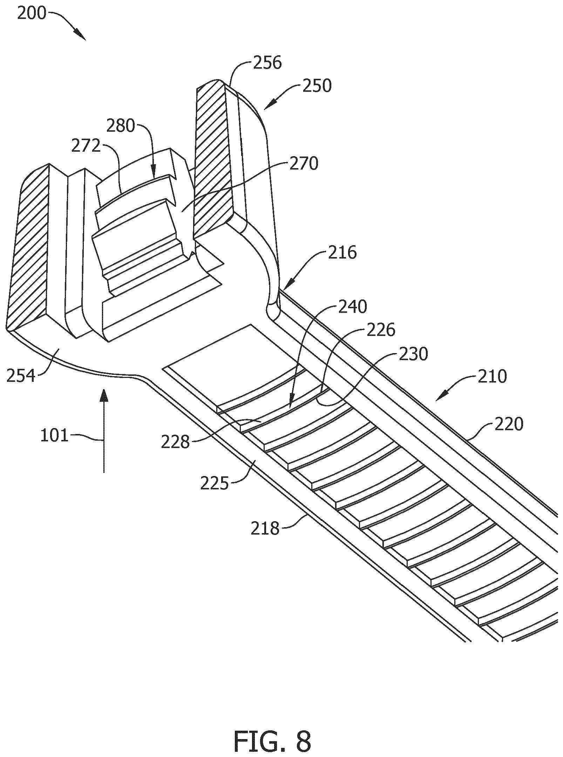

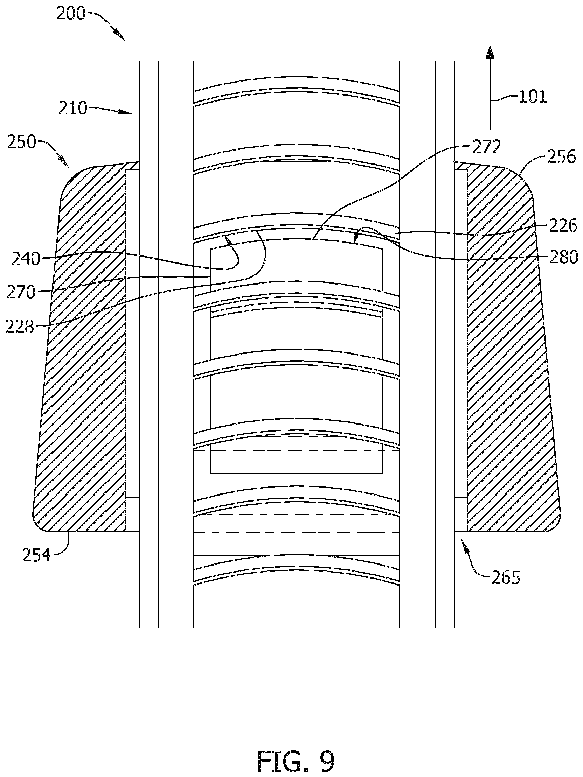

FIGS. 8 and 9 illustrate an object bundling apparatus 200 in accordance with an alternate embodiment of the present disclosure. FIG. 8 is a perspective view of the object bundling apparatus 200 and FIG. 9 is a cross-sectional view of a body 250 of the object bundling apparatus 200. The object bundling apparatus 200 of FIGS. 8 and 9 operates substantially the same as the object bundling apparatus 100 of FIGS. 1-7. The object bundling apparatus 200 includes a strap 210 and a plurality of strap engagement members 226 similar to the strap 110 of FIGS. 1-7, and the body 250 includes at least one body engagement member 270 similar to the body 150 of FIGS. 1-7.

The plurality of strap engagement members 226 of the strap 210 are disposed on a bottom surface 225 of the strap 210. The plurality of strap engagement members 126 of the strap 210 include a holding surface 228 and a leading surface 230. In some embodiments, the holding surface 228 is substantially perpendicular relative to the bottom surface 225 of the strap 210 and the leading surface 230 is oriented at an angle relative to the bottom surface 225 of the strap 210. The holding surface 228 of the strap 110 has a non-linear surface profile 240 defined between the edges 218, 220 of the strap 210. In some embodiments, the non-linear surface profile 240 is arc-shaped. In the illustrated embodiments, the non-linear surface profile 240 is concave relative to the second end 216 of the strap 210 and to the body 250.

The at least one body engagement member 270 of the object bundling apparatus 200 has the same non-linear surface profile 280 and the same orientation as the at least one body engagement member 170 of the object bundling apparatus 100. In particular, the at least one body engagement member 270 of the object bundling apparatus 200 includes a holding surface 272 in the direction of the removal end 256 of the body 250, and a non-linear surface profile 280 of the at least one body engagement member 270 is concave relative to the direction of insertion 101.

As shown in FIG. 9, with the strap 210 looped though the body 250 from the insertion end 254 , the concave non-linear surface profile 240 of the strap 210 is oriented towards the opening 265 of insertion end 254. This configuration causes the concave non-linear contact surface profile 240 of the strap 210 to nest with and engage the concave non-linear holding surface profile 280 of the body 250 upon advancement of the strap 210 in a direction opposite the direction of insertion 101. As used herein, the term "nest" with respect to engaged surface profiles denotes direct complementary contact of the surface profiles, where each of the surface profiles substantially engage one another. The nesting of the surfaces causes the holding forces to be evenly distributed across the holding surfaces. The even distribution of holding forces reduces stresses across the holding surfaces, thereby reducing or preventing plastic deformation of the holding surfaces.

In the illustrated embodiments, the holding surfaces (172, 272) of the bodies (150, 250) of the cable bundling apparatuses (100, 200) have a concave non-linear holding surface profile (180, 280), and a holding surface (128, 228) of the straps (110, 210) have either a concave or convex non-linear holding surface profile (140, 240). In some embodiments, the holding surfaces (172, 272) of the bodies (150, 250) may be concave or convex, such that the complimentary concave or convex non-linear holding surface profile (140, 240) of the straps (110, 210) either abut or nest with the non-linear holding surface profile (180, 280) of the bodies (150, 250).

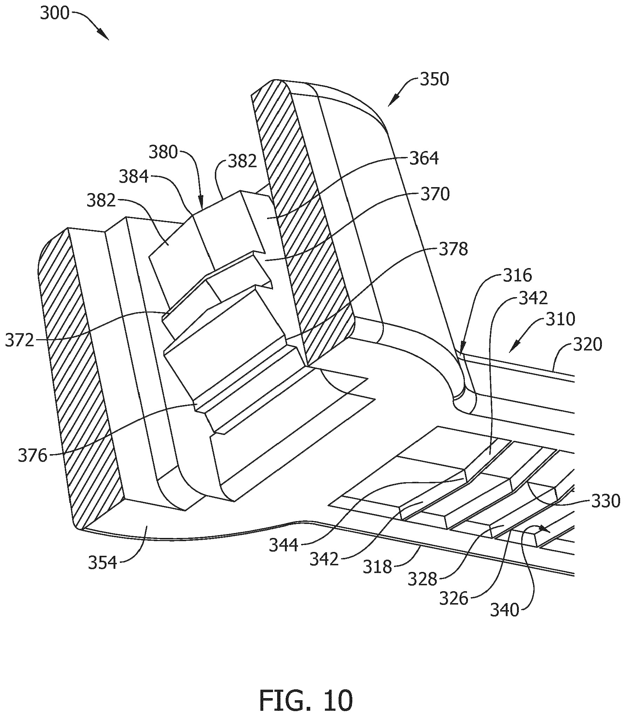

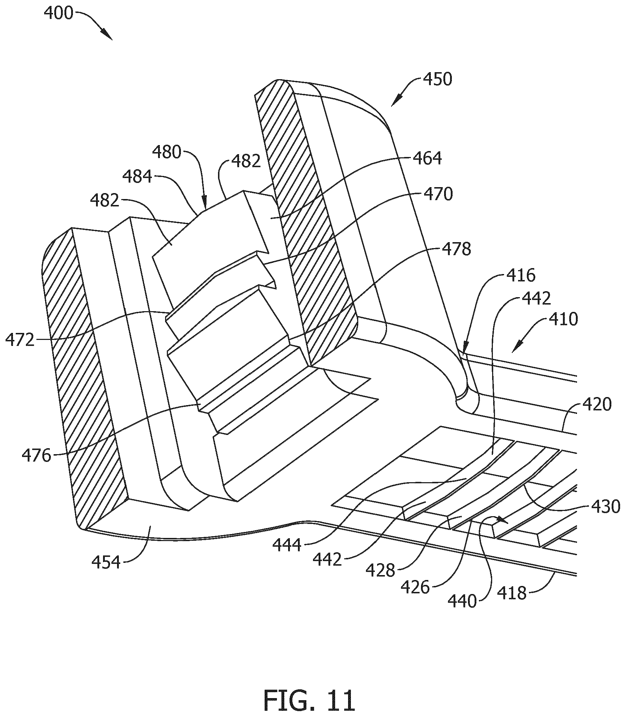

FIGS. 10 and 11 illustrate embodiments of an object bundling apparatus having angled lateral portions defining alternate non-linear surface profiles. FIG. 10 illustrates an object bundling apparatus 300 having chevron-shaped non-linear surface profiles and FIG. 11 illustrates an object bundling apparatus 400 having non-linear surface profiles defined by a flat medial portion and angled lateral portions.

Turning first to the obj ect bundling apparatus 300 shown in FIG. 10, a strap 310 includes a plurality of strap engagement members 326 having a holding surface 328 and a leading surface 330 similar to the plurality of strap engagement members (126, 226) of the object bundling apparatuses (100, 200) shown in FIGS 1-9. Likewise, a body 350 includes at least one body engagement member 370 having a holding surface 372 and a leading surface 374 similar to the at least one body engagement member (170, 270) of the object bundling apparatuses (100, 200) shown in FIGS 1-9.

A non-linear surface profile 340 of the plurality of strap engagement members 326 of the strap 310 has a chevron-shaped surface profile extending between the first end 318 and second end 320 of the strap 310. The chevron-shaped non-linear surface profile 340 is defined by angled lateral portions 342 extending between the edges 318, 320 of the strap 310. In some embodiments, the angled lateral portions 342 meet at a medial point 344, and the medial point 344 may be oriented towards a first free end (not shown) of the strap 110 or towards a second end 316 of the strap 310 and to the body 350. The orientation of the medial point 344 is dependent on the orientation of the at least one body engagement member 370 of the body 350 such that the non-linear surface profile 340 of the strap 310 either abuts or nests with the at least one body engagement member 370 of the body 350 similar to the abutting or nesting configurations of the object bundling apparatuses (100, 200) shown in FIGS 1-9.

A non-linear surface profile 380 of the at least one body engagement member 370 of the body 350 has a chevron-shaped surface profile extending between a first lateral biasing member side 376 and a second lateral biasing member side 378 of a biasing member 364 of the body 350. The chevron-shaped non-linear surface profile 380 is defined by angled lateral portions 382 extending between the lateral biasing member sides 376, 378 of the body 350. In some embodiments, the angled lateral portions 382 meet at a medial point 384, and the medial point 384 may be oriented towards an insertion end 354 of the body 350 or towards a removal end 356 of the body 350. The orientation of the medial point 384 is dependent on the orientation of the plurality of strap engagement members 326 of the strap 310 such that the non-linear surface profile 340 of the strap 310 either abuts or nests with the at least one body engagement member 370 of the body 350 similar to the abutting or nesting configurations of the object bundling apparatuses (100, 200) shown in FIGS 1-9.

Turning next to the obj ect bundling apparatus 400 shown in FIG. 11, a strap 410 includes a plurality of strap engagement members 426 having a holding surface 428 and a leading surface 430 similar to the plurality of strap engagement members (126, 226) of the object bundling apparatuses (100, 200) shown in FIGS 1-9. Likewise, a body 450 includes at least one body engagement member 470 having a holding surface 472 and a leading surface 474 similar to the at least one body engagement member (170, 270) of the object bundling apparatuses (100, 200) shown in FIGS 1-9.

A non-linear surface profile 440 of the plurality of strap engagement members 426 of the strap 410 is defined by a flat medial portion 444 and angled lateral portions 442extending between the first edge 418 and second edge 420 of the strap 110. In some embodiments, the flat medial portion 444 may be oriented towards a first free end (not shown) of the strap 410 or towards a second end 416 of the strap 410 and to the body 450. The orientation of the flat medial portion 444 is dependent on the orientation of the at least one body engagement member 470 of the body 450 such that the non-linear surface profile 440 of the strap 410 either abuts or nests with the at least one body engagement member 470 of the body 450 similar to the abutting or nesting configurations of the object bundling apparatuses (100, 200) shown in FIGS 1-9.

A non-linear surface profile 480 of the at least one body engagement member 470 of the body 450 is defined by a flat medial portion 484 and angled lateral portions 482 extending between the lateral biasing member sides 476, 478 of the body 450. In some embodiments, the flat medial portion 484 may be oriented towards an insertion end 454 of the body 450 or towards a removal end 456 of the body 450. The orientation of the flat medial portion 484 is dependent on the orientation of the plurality of strap engagement members 426 of the strap 410 such that the non-linear surface profile 440 of the strap 410 either abuts or nests with the at least one body engagement member 470 of the body 450 similar to the abutting or nesting configurations of the object bundling apparatuses (100, 200) shown in FIGS 1-9.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An object bundling apparatus comprising:
a body having an opening extending through the body, the opening defining an engagement channel having an inner wall;
at least one body engagement member disposed on the inner wall, the at least one body engagement member comprising a holding surface laterally bound by a first end and a second end, the holding surface having a non-linear surface profile between the first end and second end; and
a strap adapted to be passed through the opening in a direction of insertion, the strap having a plurality of strap engagement members, each of the strap engagement members comprising a contact surface laterally bound by a first strap end and a second strap end, the contact surface having a non-linear surface profile between the first strap end and the second strap end;
wherein the non-linear contact surface profile of the strap is configured to nest within and/or abut against the non-linear holding surface profile of the body upon advancement of the strap in a direction opposite the direction of insertion.

2. The object bundling apparatus of claim 1, wherein the holding surface of the at least one body engagement member has an arc-shaped surface profile.

3. The object bundling apparatus of claim 1 or 2, wherein the holding surface of the at least one body engagement member has a concave surface profile relative to the direction of insertion.

4. The object bundling apparatus of claim 1 or 2, wherein the holding surface of the at least one body engagement member has a convex surface profile relative to the direction of insertion.

5. The object bundling apparatus of any one of the preceding claims, wherein the contact surface of the plurality of strap engagement members has a concave arc-shaped surface profile relative to the direction of insertion.

6. The object bundling apparatus of any one of claims 1 to 4, wherein the contact surface of the plurality of strap engagement members has a convex arc-shaped surface profile relative to the direction of insertion.

7. The object bundling apparatus of claim 1, wherein the holding surface of the at least one body engagement member has a chevron-shaped surface profile extending between the first end and the second end.

8. The object bundling apparatus of claim 7, wherein the chevron-shaped surface profile is defined by angled lateral portions extending between the first end and second end.

9. The object bundling apparatus of claim 7 or 8, wherein the contact surface of the plurality of strap engagement members has a chevron-shaped surface profile extending between the first strap end and the second strap end.

10. The object bundling apparatus of any one of claims 7 to 9, wherein the chevron-shaped surface profile is defined by angled lateral portions extending between the first strap end and the second strap end.

11. The object bundling apparatus of claim 1, wherein the holding surface of the at least one body engagement member has a surface profile defined by a flat medial portion and angled lateral portions extending from the flat medial portion to the first end and second end.

12. The object bundling apparatus of claim 11, wherein the contact surface of the plurality of strap engagement members has a surface profile defined by a flat medial portion and angled lateral portions extending from the flat medial portion to the first strap end and second strap end.
